# EUROPEAN PATENT APPLICATION

(11) **EP 2 086 043 A1**
(43) Date of publication of application: **05.08.2009**
(21) Application number: 09001118.0
(22) Date of filing: 27.01.2009
(51) Int. Cl.: H01M 8/04

(54) **Fuel cell system**

(30) Priority: 04.02.2008 JP 2008024289
(71) Applicant: KABUSHIKI KAISHA TOYOTA JIDOSHOKKI, Kariya-shi, Aichi-ken (JP)
(72) Inventor: Yamada, Kazuho, Kariya-shi Aichi-ken (JP); Nakane, Yoshiyuki, Kariya-shi Aichi-ken (JP); Fujii, Toshiro, Kariya-shi Aichi-ken (JP)
(74) Representative: HOFFMANN EITLE

(57) **Abstract**

It is intended to provide a fuel cell system more capable of exhibiting effects of downsizing and reduction in weight. The fuel cell system of this invention has a stack 1 and a regenerator 7 that are provided in parallel to an air compressor 3. An air supply passage 13 to which an air discharged from the air compressor 3 is supplied and an air discharge passage 14 for discharging an unreacted air to the downstream are connected to the stack 1. A regeneration air supply passage 22 to which the air discharged from the air compressor 3 is supplied and a regeneration air discharge passage 24 for discharging the air to the downstream are connected to the regenerator 7. A fuel pump 6 has a structure that the fuel pump 6 is rotatively driven by the regenerator 7.

## Description

### TECHNICAL FIELD OF THE INVENTION

This invention relates to a fuel cell system.

### BACKGROUND ART

Conventional fuel cell systems are disclosed in JP-A-2003-109632, JP-A-2003-308858 and JP-A-2007-184196. These fuel cell systems are provided with a stack of fuel cells that generates electricity by receiving supply of fuel gas and oxidant gas, a fuel supply passage for supplying the fuel gas to the stack, and an oxidant gas supply passage in which oxidant gas supplying unit for supplying the oxidant gas to the stack is disposed. These publications also disclose a fuel cell system further provided with a fuel circulation passage in which a fuel pump for circulating the fuel gas by joining unreacted fuel gas discharged from the stack to the fuel cell supply passage is disposed.

Also, the fuel cell systems disclosed in the publications are provided with a regenerator that generates a rotative force when driven by the oxidant gas supplied from the oxidant gas supplying unit. In the fuel cell systems disclosed in JP-A-2003-109632 and JP-A-2003-308858, the regenerator is provided between the oxidant gas supplying unit and the stack. The oxidant gas supplying unit and the regenerator are connected by a regenerator air supply passage to which the oxidant gas discharged by the oxidant gas supplying unit is supplied. The regenerator and the stack are connected to each other by an air supply passage to which the oxidant gas discharged from the regenerator is supplied. Also, in the fuel cell system disclosed in JP-A-2007-184196, the stack is provided downstream of the oxidant gas supplying unit, and the regenerator is provided downstream of the stack. In short, the regenerator is provided in series with the oxidant gas supplying unit and the stack in these fuel cell systems.

In the fuel cell systems of the-above described type, the oxidant gas discharged by the oxidant gas supplying unit is supplied to the stack after being supplied to the regenerator. The fuel pump is structured to be rotatively driven by the regenerator.

Since it is possible to re-circulate the unreacted fuel gas discharged from the stack to the stack in the fuel cell systems of the above-described type provided with the fuel circulation passage, it is possible to realize improvement in efficiency. Also, in the fuel cell systems of the above-described type, since the regenerator is driven by the oxidant gas discharged from the stack to generate the rotative force, and since the fuel pump is rotatively driven by the regenerator, it is unnecessary to rotatively drive the fuel pump by a motor, thereby also achieving the effects of downsizing and reduction in weight.

### STATEMENT OF INVENTION

### PROBLEM TO BE SOLVED BY THE INVENTION

However, a pressure adjustment valve for keeping an appropriate pressure of the oxidant gas in the stack is provided downstream of the stack. Therefore, in the conventional fuel cell systems, in which the regenerator is provided in series with the oxidant gas supplying unit and the stack, a pressure loss occurs at the upstream side or the downstream side of the regenerator to cause a fluctuation in pressure of the oxidant gas driving the regenerator even when the oxidant gas supplying unit stably supplies the oxidant gas, thereby causing a fluctuation in rotative force of the regenerator. Consequently, it is difficult to stably drive the fuel pump with a sufficient rotative force, and it is difficult to realize omission or downsizing of a motor, resulting in unsatisfactory effects of downsizing and reduction in weight.

Also, in the conventional fuel cell systems of the above-described type have difficulty in imparting a sufficient pressure to the regenerator, resulting in small energy per flow rate to be generated in the regenerator. Therefore, the regenerator is increased in size for the purpose of increasing the energy per flow rate with such pressure, thereby impairing capability for being mounted on vehicles and the like.

This invention was accomplished in view of the above-described circumstances, and an object thereof is to provide a fuel cell system more capable of exhibiting effects of downsizing and reduction in weight.

### MEANS FOR SOLVING PROBLEM

The fuel cell system of this invention is comprising a stack which generates electricity by receiving supply of fuel gas and oxidant gas, a fuel supply passage for supplying the fuel gas to the stack, and a fuel circulation passage in which a fuel pump for circulating the fuel gas discharged unreacted from the stack by joining the fuel gas to the fuel supply passage, an oxidant gas supply passage in which oxidant gas supplying unit for supplying the oxidant gas to the stack is disposed, and a regenerator for generating a rotative force when driven by the oxidant gas supplied from the oxidant gas supplying unit. The fuel cell system of this invention is characterized in that:
the stack and the regenerator are provided in parallel to the oxidant gas supplying unit;
the stack is connected to an air supply passage to which the oxidant gas discharged from the oxidant gas supplying unit is supplied and an air discharge passage by which the unreacted oxidant gas is discharged downstream;
the regenerator is connected to a regeneration air supply passage to which the oxidant gas discharged from the oxidant gas supplying unit is supplied and a regeneration air discharge passage by which the oxidant gas is discharged downstream; and
the fuel pump is rotatively driven by the regenerator.

In the fuel cell system of this invention, the oxidant gas discharged from the oxidant gas supplying unit is supplied parallelly to the stack and the regenerator. Therefore, in this fuel cell system, a pressure loss does not occur in an upstream side and a downstream side of the regenerator even when a pressure adjustment valve is provided downstream of the stack. Therefore, insofar as the oxidant gas supplying unit stably supplies the oxidant gas, the pressure of the oxidant gas for driving the regenerator is not fluctuated, and the rotative force of the regeneration is not fluctuated. Consequently, it s possible to stably drive the fuel pump with a sufficient rotative force, and it is possible to realize omission or downsizing of the motor.

A temperature in the oxidant gas supply passage is higher than that of the downstream of the stack due to compression heat. Accordingly, flow rate and retrievable energy in the oxidant gas supply passage are larger than those of the downstream of the stack. Therefore, the regenerator provided in parallel with the stack from the oxidant gas supplying unit effectively generates the rotative force. Consequently, in this fuel cell system, since it is possible to impart a sufficient pressure to the regenerator, it is possible to increase energy per flow rate to be generated by the regenerator. That is, it is possible to realize downsizing of the regenerator.

Therefore, the fuel cell system of this invention is more capable of exhibiting the effects of downsizing and reduction in weight. Consequently, this fuel cell system is capable of exhibiting an excellent property for being mounted on vehicles and the like.

This fuel cell system has the following advantages as compared to the general fuel cell systems in which the fuel pump is rotatively driven by the motor.
(1) Even when the fuel pump is rotatively driven only by the regenerator, the regenerator that is capable of realizing the required torque is smaller than the motor. Therefore, it is possible to realize downsizing and reduction in weight of the fuel cell system.
(2) Though hydrogen gas that is frequently used as the fuel gas has a small molecular weight and, therefore, easily leaked out from sealing provided at a connection part of pipings or the like, it is possible to ensure safety and a low insulating property since electricity is not used for the rotative driving of the fuel pump.
(3) In general, the stack has a potential of 450 V, and the motor for rotatively driving the fuel pump is driven by about 200 V. When the fuel pump is rotatively driven by the regenerator, it is possible to avoid occurrence of corrosion in the fuel pump, which is otherwise caused by the potential difference. Also, when the fuel pump is rotatively driven by the regenerator, it is possible to reduce the requirement for maintaining high insulating property between the stack and the fuel pump for the purpose of preventing occurrence of radio noise otherwise caused by the potential difference.
(4) Re-circulation flow rate of the fuel gas is decided depending on an output of the oxidant gas supplying unit, but since the required flow rates of the fuel gas and the oxidant gas are substantially in synchronization, it is possible to control the amounts of the fuel gas and the oxidant gas in an integrated fashion in accordance with a fluctuation in required output, thereby making it possible to simplify a control device.

In the fuel cell system of this invention, the oxidant gas supplying unit can be an air compressor for supplying a compressed air to the oxidant gas supply passage. In this case, the air supply passage and the regeneration air supply passage may be separated from the air compressor; either one of the air supply passage or the regeneration air supply passage may be connected to the air compressor; the regeneration air supply passage may be separated from the air supply passage; or the air supply passage may be separated from the regeneration air supply passage.

In the fuel cell system of this invention, the oxidant gas may preferably be supplied to the air supply passage and the regeneration air supply passage via an open-shut valve. In this case, the open-shut valve may preferably be a three-way valve. It is possible to change a ratio between the flow rate of the oxidant gas to be supplied to the stack and the flow rate of the oxidant gas to be supplied to the regenerator by a degree of opening of the open-shut valve. Therefore, it is possible to arbitrarily adjust the output of the regenerator, thereby making it possible to more suitably control the fuel cell system. For instance, in a scavenging mode as a countermeasure for flooding, it is possible to rotatively drive the fuel pump at a high speed by supplying a large amount of oxidant gas to the regenerator without passing the oxidant gas through the stack, thereby enabling more rapid scavenging.

In the fuel cell system of this invention, the fuel pump and the regenerator may be formed integrally with each other. In this case, it is possible to realize a reduction in production cost by simplifying the structure of the fuel cell system.

Also, the stack may preferably be adjacent to the fuel pump and the regenerator. This case is advantageous for preventing the fuel pump and the regenerator from being frozen since the stack has large heat capacity. Also, since it is possible to supply the stack with the fuel gas by the short distance as well as to discharge the fuel gas from the stack by the short distance, it is possible to reduce a passage resistance of the fuel gas as well as to realize a reduction in production cost by simplifying the structure of the fuel cell system.

It is possible to assist the regenerator by a motor in case it is difficult to drive the fuel pump by the regenerator.

### DESCRIPTION OF DRAWINGS

Fig. 1 is a schematic block diagram showing a fuel cell system of Embodiment 1.

Fig. 2 a schematic block diagram showing a fuel cell system of Embodiment 2.

### DESCRIPTION OF SPECIFIC EMBODIMENTS

Hereinafter, Embodiments 1 and 2 that are specific examples of this invention will be described with reference to the drawings.

### EMBODIMENT 1

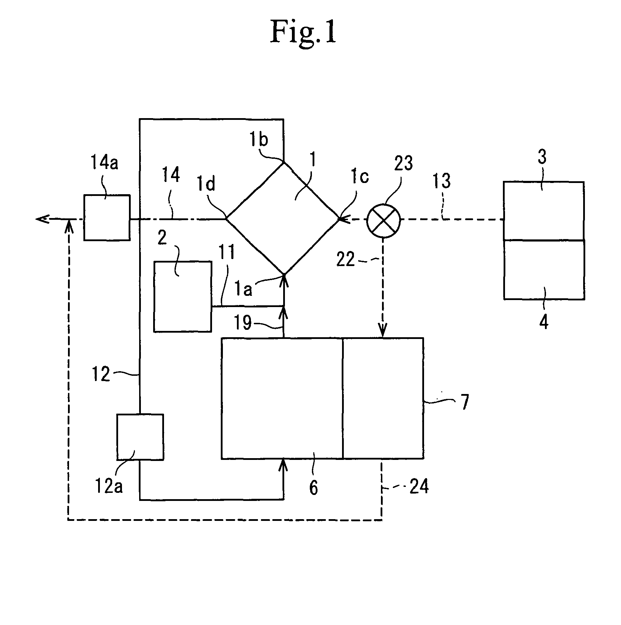

As shown in Fig. 1, the fuel cell system of Example 1 is provided with a stack 1, a hydrogen tank 2 as a fuel tank, an air compressor 3, and a cooling water pump (not shown).

The stack 1 is obtained by stacking a plurality of fuel cells in a housing. Each of the fuel cells has a structure that a solid polymer electrolyte membrane is sandwiched between an anode pole and a cathode pole. On the housing of the stack 1, a hydrogen supply port 1a to which hydrogen gas is supplied as fuel gas, a hydrogen discharge port 1b from which unreacted hydrogen gas is discharged, an air supply port 1c to which the air as the oxidant gas is supplied, and an air discharge port 1d by which an unreacted air is discharged are formed. The hydrogen supply port 1a and the hydrogen discharge port 1b are communicated to the entire anode poles of the entire fuel cells via a passage formed inside the housing. Also, the air supply port 1c and the air discharge port 1d are communicated to the entire cathode poles of the entire fuel cells via a passage formed inside the housing. On the housing, a cooling water supply port (not shown) to which cooling water is supplied and a cooling water discharge port (not shown) from which the cooling water is discharged are formed.

The hydrogen tank 2 stores high pressure hydrogen gas. The hydrogen supply port 1a of the stack 1 and the hydrogen tank 2 are connected to each other by the fuel supply passage 11, and a fuel discharge passage 12 is connected to the hydrogen discharge port 1b that is downstream of the stack 1. The fuel discharge passage 12 is provided with a gas/liquid separator 12a.

The air compressor 3 supplies the air in the atmosphere after compressing the air. The air compressor 3 is driven by a motor 4. The air supply port 1c of the stack 1 and an discharge port of the air compressor 3 are connected by an air supply passage 13 via an open-shut valve 23 formed of a three-way valve, and an air discharge passage 14 is connected to the air discharge port 1d that is downstream of the stack 1. The air supply passage 13 is an oxidant gas supply passage. The air discharge passage 14 is provided with a pressure adjustment valve 14a for maintaining an appropriate pressure of the air inside the stack 1.

Also, this fuel cell system is provided with a hydrogen pump 6 as a fuel pump and a regenerator 7. The hydrogen pump 6 and the regenerator 7 are formed in an integral fashion and adjacent to the housing of the stack 1.

The hydrogen pump 6 supplies the hydrogen gas inside the hydrogen tank 2 to the stack 1. A fuel discharge passage 12 is connected to an suction port of the hydrogen pump 6, and a fuel circulation discharge passage 19 connected to the fuel supply passage 11 is connected to an discharge port of the hydrogen pump 6. The fuel discharge passage 12 and the fuel circulation discharge passage 19 are a fuel circulation passage.

A regeneration air supply passage 22 is connected to an suction port of the regenerator 7, and a regeneration air discharge passage 24 is connected to an discharge port of the regenerator 7. The regeneration air supply passage 22 is connected to the air supply passage 13 via an open-shut valve 23. The regeneration air discharge passage 24 is connected to the air discharge passage 14 that is downstream from the pressure adjustment valve 14a. The regenerator 7 has a structure that a turbine thereof is rotated by the air supplied to the regeneration air supply passage 22. The turbine of the regenerator 7 is connected tandem to a driving shaft of the hydrogen pump 6.

In this fuel cell system, the air discharged by the air compressor 3 is supplied parallelly to the stack 1 and the regenerator 7 by the displacement of the open-shut valve 23. Therefore, in this fuel cell system, it is possible to prevent a pressure loss at an upstream side or a downstream side of the regenerator 7 though the pressure adjustment valve 14a is provided downstream from the stack 1. Therefore, insofar as the air compressor 3 stably supplies the air, the pressure of the air driving the regenerator 7 is not fluctuated, and a rotative force of the regenerator 7 is not fluctuated. Consequently, it is possible to stably drive the hydrogen pump 6 with a sufficient rotative force, thereby making it possible to realize omission of the motor.

More specifically, a work W of the regenerator 7 is a product PV of an air pressure P and a volume V. In the case where an discharge gauge pressure of the air compressor 3 is 200 kPa air of 200 kPa is supplied to the regenerator 7. If the regenerator 7 is provided in series with the air compressor 3 and the stack 1 as in the conventional techniques, it is necessary to suppress the pressure loss at the regenerator 7 to less than 50 kPa since the stack 1, a moisturizing module (not shown), the gas/liquid separator 12a, and the like can cause a pressure loss of 150 kPa. As a comparison between the fuel cell systems, the fuel cell system of Embodiment 1 requires the volume V of 1/4 of that of the conventional fuel cell systems in order to achieve an identical work W.

Also, the air discharge passage 14 has a temperature of about 120°C, and, in contrast, the air supply passage 13 has a temperature of about 150°C to 250°C due to the compression heat. Therefore, the air flow rate in the air supply passage 13 is larger than that of the air discharge passage 14 and abundant in retrievable energy. Therefore, the regenerator 7 provided in parallel with the stack 1 from the air compressor 3 effectively generates the rotative force. That is, since it is possible to impart a sufficient pressure to the regenerator 7 in this fuel cell stem, it is possible to increase energy per flow rate, which is generated by the regenerator 7. Therefore, it is possible to realize downsizing of the regenerator 7. In general, an inter-cooler is provided just in front of the stack 1 to cool down the air inside the air supply passage 13 to a durable temperature of the stack 1.

During the above process, it is possible to change the ratio between the flow rate of the air to be supplied to the stack 1 and the flow rate of the air to be supplied to the regenerator 7 by the opening degree of the open-shut valve 23. Therefore, it is possible to arbitrarily adjust an output from the regenerator 7, thereby making it possible to more suitably control the fuel cell system.

Also, this fuel cell system has a structure that the hydrogen pump 6 and the regenerator 7 are formed integrally with the stack 1. Therefore, heat from the regenerator 7 is easily transmitted to the hydrogen pump 6, thereby enabling more reliable activation of the hydrogen pump 6 under a low temperature environment. Also, since the structure is simplified, a reduction in production cost is realized. Further, since the hydrogen pump 6 and the regenerator 7 are formed integrally with the stack 1 having the large heat capacity, the temperature is hardly lowered, which is advantageous for anti-freezing. Also, since it is possible to supply the hydrogen gas to the stack 1 by a short distance as well as to discharge the hydrogen gas from the stack 1 by a short distance, it is possible to reduce a passage resistance of the hydrogen gas as well as to realize a reduction in production cost by the simplification of structure of the fuel cell system.

Therefore, this fuel cell system is more capable of exhibiting the effects of downsizing and reduction in weight. Consequently, the fuel cell system is capable of exhibiting an excellent property for being mounted on vehicles and the like. Also, this fuel cell system has the above-described advantages as compared to the general fuel cell systems in which the hydrogen pump 6 is rotatively driven by the motor. Therefore, this fuel cell system is more practical.

### EMBODIMENT 2

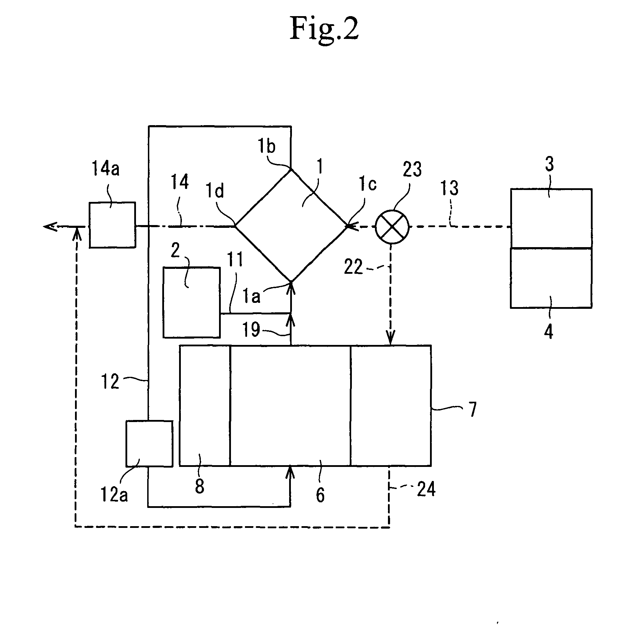

As shown in Fig. 2, the fuel cell system of Embodiment 2 is provided with a small motor 8. The motor 8 is fixed to a housing of a stack 1 together with a hydrogen pump 6 and a regenerator 7 in an integral fashion. Also, a rotation shaft of the motor 8 is connected tandem to a turbine of the regenerator 7 and a driving shaft of the hydrogen pump 6. Other parts of the structure are the same as those of the fuel cell system of Embodiment 1.

In this fuel cell system, since the motor 8 is connected to the regenerator 7, it is possible to assist the regenerator 7 by the motor 8 in case it is difficult to drive the hydrogen pump 6 by the regenerator 7.

Also, when an electromagnetic clutch is provided between the rotation shaft of the motor 8 and the turbine of the regenerator 7 or between the turbine of the regenerator 7 and the driving shaft of the hydrogen pump 6 in this fuel cell system, it is possible to drive the hydrogen pump 6 together with the regenerator 7 or independently from the regenerator 7. Since the motor 8 is not always driven, demerit that can be caused by the continuous driving of the motor 8 does not occur. Other effects are the same as those of Embodiment 1.

Though this invention has been described in conjunction with Embodiments 1 and 2 in the foregoing, this invention is not limited to the above-described Embodiments 1 and 2, and it is of course possible to modify this invention as required insofar as the modification does not deviate from the scope of this invention.

### EXPLANATION OF INDUSTRIAL APPLICATION OF INVENTION

This invention is applicable to a power unit of a vehicle and the like.

## Claims

1. A fuel cell system comprising:
a stack of fuel cells which generates electricity by receiving supply of fuel gas and oxidant gas are supplied thereto;
a fuel supply passage for supplying the fuel gas to the stack;
a fuel circulation passage in which a fuel pump for circulating the fuel gas discharged unreacted from the stack by joining the fuel gas to the fuel supply passage is disposed;
an oxidant gas supply passage in which an oxidant gas supplying unit for supplying the oxidant gas to the stack is disposed; and
a regenerator for generating a rotative force when driven by the oxidant gas supplied from the oxidant gas supplying unit; **characterized in that**:
the stack and the regenerator are provided in parallel to the oxidant gas supplying unit;
the stack is connected to an air supply passage to which the oxidant gas discharged from the oxidant gas supplying unit is supplied and an air discharge passage by which the unreacted oxidant gas is discharged downstream;
the regenerator is connected to a regeneration air supply passage to which the oxidant gas discharged by the oxidant gas supplying unit is supplied and a regeneration air discharge passage by which the oxidant gas is discharged downstream; and
the fuel pump is rotatively driven by the regenerator.

2. The fuel cell system according to claim 1, wherein the oxidant gas supplying unit is an air compressor for supplying a compressed air to the oxidant gas supply passage.

3. The fuel cell system according to claim 1 or 2, wherein the oxidant gas is supplied to the air supply passage and the regeneration air supply passage via an open-shut valve.

4. The fuel cell system according to any one of claims 1 to 3, wherein the fuel pump and the regenerator are formed in an integral fashion.

5. The fuel cell system according to claim 4, wherein the stack is adjacent to the fuel pump and the regenerator.
